# DEMANDE DE BREVET EUROPEEN

(11) **EP 2 189 416 A1**
(43) Date de publication de la demande: **26.05.2010**
(21) Numéro de dépôt: 09290812.8
(22) Date de dépôt: 23.10.2009
(51) Int. Cl.: C01B 3/52, C01B 3/48, B01D 53/14

(54) **Procédé de production d'hydrogène avec captation totale du C02 et recyclage du méthane non converti**

(30) Priorité: 20.11.2008 FR 0806509
(71) Demandeur: IFP, 92852 Rueil-Malmaison Cédex (FR)
(72) Inventeur: Bouillon, Pierre-Antoine, 69003 Lyon (FR); Huyghe, Raphael, 69700 Saint Andeol le Chateau (FR); Lugo, Rafael, 95870 Bezons (FR); Giroudiere, Fabrice, 69530 Orlienas (FR)

(57) **Abrégé**

La présente invention concerne un procédé de production d'hydrogène à partir d'une charge hydrocarbonée et de vapeur d'eau comprenant :
- une étape de production d'un gaz de synthèse dans une unité de vaporéformage de la charge hydrocarbonée en présence de la vapeur d'eau,
- une étape de conversion à la vapeur du gaz de synthèse obtenu à l'étape précédente produisant un flux d'hydrogène contenant du méthane et du dioxyde de carbone,
- une étape de captage du dioxyde de carbone et du méthane, présents dans le flux obtenu à l'étape de conversion à la vapeur, sous forme d'hydrates produisant un flux d'hydrogène pur,
- une étape de régénération du méthane,
- une étape de recyclage du méthane vers le vaporéformage.

## Description

La présente invention concerne le domaine de la production d'hydrogène, et plus particulièrement un procédé de production d'hydrogène avec captation totale du CO₂ et recyclage du méthane non converti.

Le réchauffement climatique de la planète, observé depuis l'ère industrielle selon la communauté scientifique internationale, pourrait modifier dramatiquement les climats et écosystèmes de nombreuses régions du globe. L'émission des gaz à effet de serre, et spécialement le dioxyde de carbone (CO₂) semble être responsable de ce réchauffement.

Les énergies fossiles (gaz naturel, pétrole, charbon) constituent une part importante des énergies facilement disponibles sur la planète. Or ces énergies fossiles, lorsqu'elles sont utilisées, produisent du CO₂ (généralement lors d'une étape de combustion) et participent ainsi au réchauffement climatique.

Une des solutions préconisées pour lutter contre le réchauffement climatique par l'émission de gaz à effet de serre est de capturer le CO₂ produit, puis de le stocker dans le sous-sol. Plusieurs voies sont explorées, dont le captage en précombustion qui consiste à convertir l'énergie fossile en hydrogène avec captage et stockage du CO₂ coproduit. L'hydrogène, vecteur énergétique, peut alors être brûlé librement sans émission de gaz à effet de serre.

Il existe actuellement plusieurs moyens de produire industriellement de l'hydrogène, et ainsi de l'électricité, à partir des énergies fossiles. Le moyen le plus répandu est le vaporéformage du gaz naturel réalisé dans un four (en anglais SMR: Steam Methane Reforming) qui présente l'avantage d'utiliser une charge ayant un ratio hydrogène/carbone élevé compte tenu de la forte teneur en méthane dans sa composition. De façon simplifiée, la réaction catalytique de SMR peut s'écrire de la manière suivante:

*CH*₄ + *H*₂*O* ↔ *CO* + 3*H*₂

Cette réaction, très endothermique est équilibrée. Elle est favorisée par des températures élevées et se fait en général dans un four chauffé par un combustible tel que le gaz naturel. Classiquement l'unité de SMR est suivie d'une étape de conversion à la vapeur (WGS: Water Gas Shift) qui permet de maximiser la production d'hydrogène par la réaction suivante:

*CO* + *H*₂*O* ↔ *CO*₂ + *H*₂

Lorsqu'il faut capter le CO₂ en vue de son stockage, il est possible d'utiliser ensuite une unité de lavage aux amines (MDEA activée par exemple) qui extrait le CO₂ du flux riche en hydrogène, qui est ensuite envoyé par exemple dans une turbine à gaz en vue de produire de l'électricité, tandis que le CO₂ est comprimé et réexpédié en sous-sol.

Un inconvénient majeur dans ce type de procédé réside dans le fait que la réaction de SMR n'est pas complète. Le flux riche en hydrogène produit contient une quantité importante de méthane qui n'est pas converti à l'étape de conversion à la vapeur et qui n'est pas capté lors du lavage aux amines. L'hydrogène obtenu émet donc du CO₂ lorsqu'il est brûlé. L'objectif de captage du CO₂ n'est donc pas complètement atteint par un tel procédé, et seulement entre 75% et 80% maximum de CO₂ est capturé.
Une amélioration à cette technique consiste à ajouter une unité d'adsorption sur tamis moléculaire des impuretés modulée en pression (PSA). On obtient à ce moment là deux flux: un flux d'hydrogène pur typiquement à 99.99 % et un flux d'impuretés contenant au moins 20% d'hydrogène. Ce flux à basse pression est envoyé dans des brûleurs du four de vaporeformage, ce qui diminue le gaz naturel nécessaire pour le four, donc la production de CO₂. Cependant ce procédé présente des inconvénients majeurs et notamment :
- la purge du PSA qui contient le méthane est à basse pression et donc difficile à recycler économiquement dans le procédé SMR car sa recompression consommerait trop d'énergie et serait trop coûteuse. Lorsque la purge du PSA est utilisée dans les brûleurs du four de vaporeformage du gaz naturel, le CO₂ généré par la combustion du méthane présent dans la purge du PSA n'est pas capté.
- une partie importante de l'hydrogène est perdue avec la purge du PSA.
Ce procédé permet donc d'obtenir de l'hydrogène pur (exempt de méthane), mais ne permet pas de capter le CO₂ qui sera émis lors de la combustion du méthane séparé. Il est également connu un autre procédé pour la production d'hydrogène combiné au procédé de production d'électricité (appelé procédé Hygensys®). Ce procédé basé sur le même que celui précédemment décrit propose de brûler dans une chambre de combustion adéquate, remplaçant l'unité PSA, le flux d'hydrogène produit afin de produire de l'électricité sans émissions de CO₂. Les gaz chauds issus de la combustion sont utilisés via un réacteur échangeur (Hygensys®) pour apporter l'énergie nécessaire à la réaction de vaporeformage. Le procédé Hygensys® met en oeuvre la réaction de vaporeformage du gaz naturel dans un réacteur-échangeur compact chauffé par convection et intégré avec une turbine à gaz. Ce concept permet une forte intégration thermique et conduit à la co-production d'hydrogène et d'électricité, tout en facilitant le captage du CO₂. Ce procédé HyGenSys® évite la production importante de vapeur grâce à l'amélioration de l'efficacité de la section réactionnelle. Mais ce procédé possède les inconvénients suivants :
- il reste une proportion non négligeable de CH₄ dans le flux d'H₂, ce qui entraîne un taux de captage du CO₂ limité (max 80%) sur l'ensemble du procédé.
- le CO₂ est produit à basse pression (Amine), ce qui nécessitera une compression ultérieure.
Ce procédé permet donc la production d'électricité avec captage du CO₂ à un rendement intéressant à partir de méthane, mais montre un taux de captage limité par la conversion de l'unité de reformage à la vapeur.

La présente invention a donc pour objet de pallier un ou plusieurs des inconvénients de l'art antérieur en proposant un procédé de production d'hydrogène permettant de capter le CO₂ et le méthane, et de recycler le méthane vers l'étape de vaporéformage sans perte d'énergie.

Pour cela la présente invention propose un procédé de production d'hydrogène à partir d'une charge hydrocarbonée et de vapeur d'eau comprenant :
- une étape de production d'un gaz de synthèse dans une unité de vaporéformage de la charge hydrocarbonée en présence de la vapeur d'eau, un combustible apportant la chaleur nécessaire à la réaction,
- une étape de conversion à la vapeur du gaz de synthèse obtenu à l'étape précédente produisant un flux d'hydrogène contenant du méthane et du dioxyde de carbone,
- une étape de captage du dioxyde de carbone et du méthane, présents dans le flux obtenu à l'étape de conversion à la vapeur, sous forme d'hydrates produisant un flux d'hydrogène pur,
- une étape de régénération du méthane,
- une étape de recyclage du méthane vers le vaporéformage.

Selon un mode de réalisation de l'invention, l'étape de captage du dioxyde de carbone et du méthane sous forme d'hydrates est suivi d'une étape de régénération du dioxyde de carbone.

Selon un autre mode de réalisation de l'invention, une étape de régénération du dioxyde de carbone est effectuée en même temps que l'étape de régénération du méthane.

Dans un mode de réalisation de l'invention, la charge hydrocarbonée est du gaz naturel.

Dans un mode de réalisation de l'invention, l'étape de captage du dioxyde de carbone et du méthane sous forme d'hydrate s'effectue dans un mélange comprenant de l'eau et un solvant non miscible à l'eau.

Dans un mode de réalisation de l'invention ce mélange comprend en outre au moins un composé amphiphile.

Dans un mode de réalisation de l'invention, l'étape de captage sous forme d'hydrates est réalisée à une température comprise entre 0 et 60°C et une pression comprise entre 0,2 et 6 MPa.

Dans un mode de réalisation de l'invention, l'étape de régénération du dioxyde de carbone est réalisée à une température comprise entre 0 et 40 °C et une pression comprise entre 0,2 et 6 MPa.

Dans un mode de réalisation de l'invention, l'étape de régénération du méthane est réalisée à une température comprise entre 0 et 40 °C et une pression comprise entre 0,2 et 6 Mpa.

Selon un mode de réalisation de l'invention, l'étape de régénération du dioxyde de carbone et du méthane est réalisée à une température comprise entre 0 et 40 °C et une pression comprise entre 0,2 et 6 MPa.

Selon un mode de réalisation de l'invention, le flux de méthane obtenu par régénération est recyclé à l'entrée de l'étape de vaporeformage.

Selon un mode de réalisation de l'invention, le procédé de production d'hydrogène comprend une étape de production d'électricité à partir du flux d'hydrogène obtenu à l'étape de captage du dioxyde de carbone et de méthane.

Selon un mode de réalisation de l'invention, la production d'électricité est réalisée en envoyant le flux d'hydrogène dans une chambre de combustion.

Selon un mode de réalisation de l'invention, les fumées chaudes obtenues à l'issu de l'étape de combustion sont recyclées vers le réacteur de vaporéformage.

D'autres caractéristiques et avantages de l'invention seront mieux compris et apparaîtront plus clairement à la lecture de la description faite, ci-après, en se référant aux figures annexées et données à titre d'exemple:
- la figure 1 représente le schéma classique du procédé de production d'hydrogène selon l'art antérieur,
- la figure 2 représente le schéma du procédé de production d'hydrogène selon l'invention,
- la figure 3 représente une variante du schéma de production d'hydrogène selon l'invention pour la production d'électricité,
- La figure 4 représente une variante du schéma de production d'hydrogène selon l'invention,

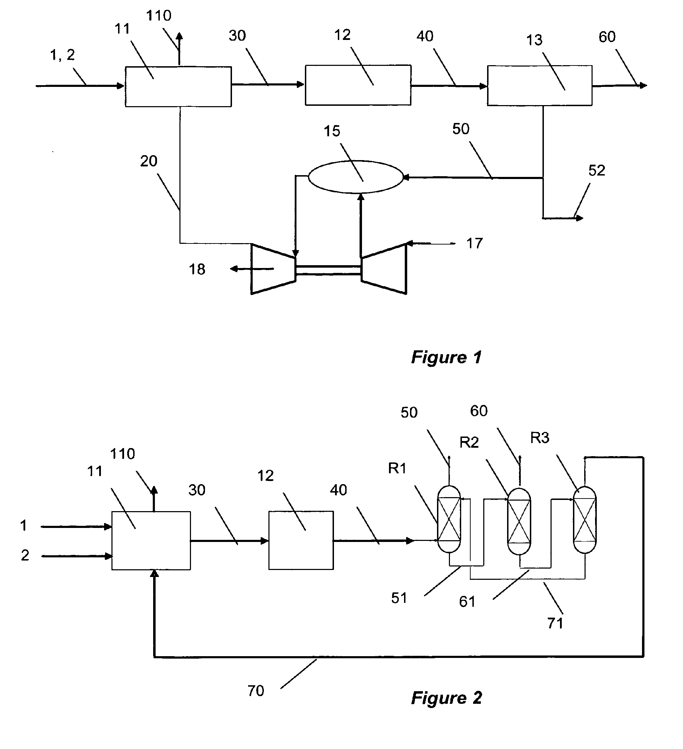

Comme illustré sur les figures 1, 2, 3 et 4, lors du procédé de production d'hydrogène un flux de gaz naturel circulant dans un conduit (1) et un flux de vapeur d'eau circulant dans un conduit (2) sont envoyés comme charge dans une unité de vaporéformage (SMR) (11). La chaleur nécessaire à la réaction est produite par un flux de combustible, par exemple du gaz naturel, envoyé dans le four de vaporéformage et par un flux d'hydrogène recyclé. Cette réaction produit en sortie du four (110) un flux de fumées contenant du gaz carbonique. Le flux de gaz de synthèse circulant dans un conduit (30) obtenu par la réaction de vaporéformage contient principalement de l'hydrogène (H₂), du monoxyde de carbone (CO), du dioxyde de carbone (CO₂), ainsi que de la vapeur d'eau (H₂O) et un peu de méthane n'ayant pas réagi (CH₄), car la réaction est équilibrée et même à une température de 900°C, il reste environ 4% mol de méthane n'ayant pas réagi. Ce flux de gaz de synthèse est envoyé par un conduit (30) à l'unité de conversion à la vapeur (12). Dans cette unité l'essentiel du monoxyde de carbone est converti en dioxyde de carbone à l'aide de la vapeur d'eau, libérant du même coup un peu plus d'hydrogène. Cette réaction aussi est équilibrée, et il reste finalement un peu de monoxyde de carbone (0,5% dans des conditions de conversion poussée). En sortie de l'unité de conversion (12), le flux de conversion obtenu circulant dans un conduit (40) contient donc de l'hydrogène, du dioxyde de carbone de l'eau, du méthane et des traces de monoxyde de carbone.

Dans le procédé selon l'invention (illustré sur les figures 2, 3 et 4) le flux de conversion est ensuite envoyé vers une unité de formation d'hydrates (R1), contrairement au procédé de l'art antérieur (illustré sur la figure 1) où il est dirigé vers une unité d'amine (13) utilisant de la méthyldiéthylamine (MDEA) en combinaison avec au moins une autre amine, cette unité d'amines étant suivie soit d'une unité d'adsorption des impuretés sur tamis moléculaire, modulée en pression (procédé PSA) soit d'une chambre de combustion (15) dans le but de produire de l'électricité.

L'unité de formation d'hydrates de CO₂ et de méthane est constituée d'une enceinte réactionnelle ou réacteur (R1) dans laquelle le CO₂ et le méthane sont convertis en hydrates de CO₂ et de méthane.

Les hydrates formés sont des hydrates binaires, c'est à dire un mélange d'hydrates de CO₂ et de méthane. Le mélange CO₂₋CH₄ forme des hydrates de structure sl (dioxyde de carbone, méthane, oxyde de triméthylène) ou de type sll (méthane-éthane, propane, tétrahydrofurane, oxyde de triméthylène) si on envisage d'utiliser des additifs promoteurs (Par exemple du tétrahydrofurane).

Comme illustré sur les figures 2, 3 et 4, le flux de conversion arrive dans l'enceinte (R1) à une pression comprise généralement entre 0,2 et 4 MPa, et de préférence entre 2 et 3,5 MPa. La température dans l'enceinte (R1) est comprise entre 0 et 60°C, et de préférence entre 10 et 20°C. Ce flux est mis en contact avec un mélange d'au moins deux phases liquides non miscibles dont l'une au moins est constituée d'eau, et préférentiellement de molécules amphiphiles (détaillées plus loin). Le flux de conversion et les phases liquides sont mises en contact dans des conditions de pression et de température compatibles avec la formation d'une phase hydrate constituée de composés acides et d'eau. Cette formation peut être aidée par l'adjonction d'un ou plusieurs additifs adéquats. Cette étape permet la séquestration d'une forte proportion de CO₂ et méthane dans la phase hydrate, et permet ainsi de purifier l'hydrogène. Les particules d'hydrate de CO₂ et de méthane sont dispersées dans le liquide non miscible à l'eau et transportées sous forme d'une suspension de solides. L'hydrogène ainsi purifié contient donc peu de CO₂ et de méthane.

Le flux d'hydrogène purifié est évacué de l'enceinte par le conduit (50). Ce flux ne contient plus que quelques traces de CO₂ et de méthane.

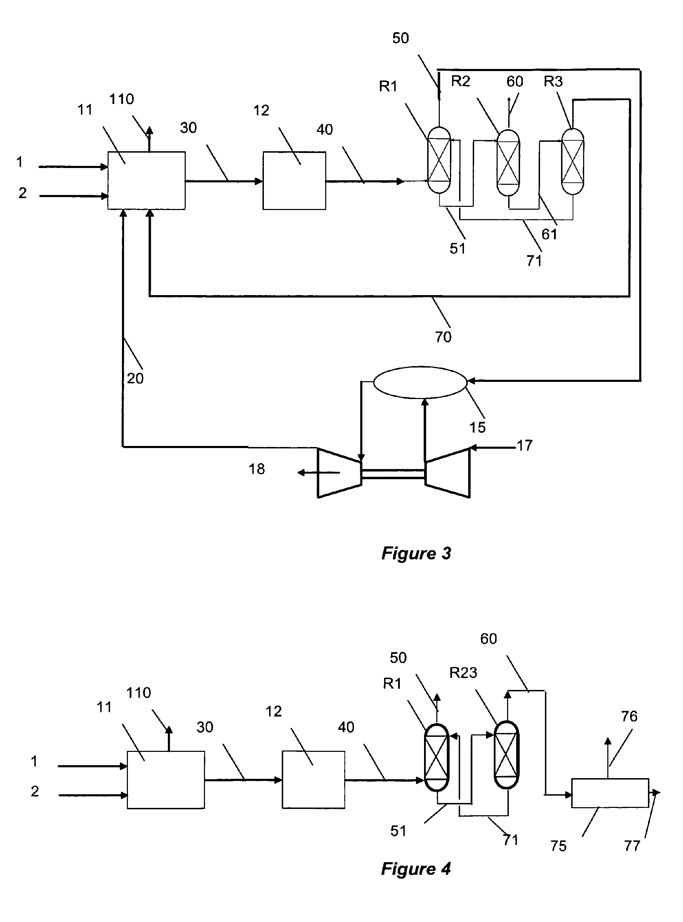

Selon une variante de l'invention, illustré sur les figures 2 et 3, le flux d'hydrates de CO₂ et de méthane est amené par le conduit (51) vers une deuxième enceinte réactionnelle (R2). Cette deuxième enceinte (R2) est utilisée pour réaliser la régénération du CO₂. Pour régénérer le CO₂ se trouvant sous forme d'hydrates il est nécessaire que l'intérieur de la deuxième enceinte (R2) soit à une température comprise en général entre 0 et 40°C, de préférence entre 10 et 20°C, et à une pression comprise en général entre 0,2 et 6 MPa, de préférence entre 2 et 4 MPa. A ce stade du procédé seul le CO₂ est régénéré. Le méthane se trouve encore sous forme d'hydrates. Le CO₂ régénéré est évacué par le conduit (60). Ce flux de CO₂ est pratiquement pur et contient très peu de méthane et d'hydrogène.

Ce flux de CO₂ est ensuite envoyé vers une unité de compression et de séchage, pour être ensuite transporté vers un lieu de réinjection tel qu'un gisement épuisé ou une couche géologique adaptée.

A la suite de la deuxième enceinte (R2) est disposée une troisième enceinte réactionnelle (R3). Le flux d'hydrates de méthane non régénéré se trouvant dans la deuxième enceinte (R2) est envoyé dans cette troisième enceinte (R3) par le conduit (61) pour régénérer le méthane. De la même façon que pour la régénération du CO₂, il est nécessaire que l'intérieur de l'enceinte (R3) soit à une certaine température et une certaine pression. Pour régénérer le méthane se trouvant sous forme d'hydrates il est nécessaire que l'intérieur de la deuxième enceinte (R3) soit à une température comprise en générale entre 0 et 40°C, de préférence entre 0 et 20°C, et à une pression comprise en générale entre 0,2 et 6 MPa, de préférence entre 2 et 4 MPa. Le flux de méthane obtenu contient ainsi très peu de CO₂ et d'hydrogène.

Le flux de méthane régénéré est ensuite recyclé vers le réacteur de vaporéformage par le conduit (70).Le solvant qui ne contient plus d'hydrate est lui recyclé par le conduit (71) vers la première enceinte réactionnelle (R1) pour la formation d'hydrates.

Dans une variante de l'invention la deuxième enceinte (R2) est utilisée pour régénérer le méthane et la troisième enceinte (R3) est utilisée pour régénérer le CO₂.

Dans une autre variante du procédé décrite suivant la figure 4, le réacteur (R23) est utilisé dans des conditions telles que tous les hydrates de CO₂ et de méthane sont régénérés. La température est alors comprise en générale entre 0 et 40°C, de préférence entre 20 et 30°C, et à une pression comprise en générale entre 0,2 et 6 MPa, de préférence entre 2 et 4 MPa. Le solvant régénéré (71) ne contient plus d'hydrate et est recyclé vers le réacteur (R1), tandis que le flux de gaz contenant le méthane et le CO₂ est dirigé vers une unité de séparation (75) par le conduit (60). Cette unité est utilisée dans une étape mettant en oeuvre par exemple un procédé tel qu'une absorption chimique afin de séparer le CO₂ et le méthane. Dans ce mode de réalisation, le méthane obtenu à haute pression est recyclé par le conduit (77) dans le réacteur de vaporéformage sans compression supplémentaire, le CO₂ obtenu à basse pression est évacué par le conduit (76) et est éventuellement comprimé pour le transport.

Comme illustré sur la figure 3, le flux d'hydrogène purifié obtenu peut ensuite servir par exemple à la production d'électricité (18).

Ainsi, dans une autre variante de l'invention une partie du flux d'hydrogène est dirigé par le conduit (50) vers une chambre de combustion (15) afin de produire de l'électricité (18) avec de l'air amené par un conduit (17). Les gaz chauds issus de la combustion sont recyclés par le conduit (20) vers le réacteur (11) de vaporeformage qui dans ce cas est de préférence un réacteur-échangeur Hygensys®. Une autre partie de l'hydrogène est exportée par le conduit (52).

### Conditions de formation des hydrates:

Le procédé de formation/dissociation des hydrates est réalisé dans un milieu comprenant de l'eau -composant des hydrates- et un solvant non miscible à l'eau. A ce mélange, on ajoute de préférence au moins un composé amphiphile qui présente la propriété d'abaisser la température de formation des hydrates et/ou de modifier les mécanismes de formation et d'agglomération. Ces modifications peuvent particulièrement être mises à profit pour le transport de la dispersion d'hydrates.

Les proportions du mélange eau/solvant peuvent être comprises respectivement entre 0,5/99,5 à 60/40% en volume, et de préférence entre 10/90 et 50/50%, et plus précisément entre 20/80 et 40/60% en volume.

Les composés amphiphiles sont des composés chimiques (monomère ou polymère) ayant au moins un groupement chimique hydrophile ou polaire, présentant une forte affinité avec la phase aqueuse et au moins un groupement chimique présentant une forte affinité avec le solvant (communément désignée comme hydrophobe).

Lors du contact d'une phase eau avec un gaz pouvant former des hydrates, on observe d'une part, un faible taux de conversion de l'eau en hydrate dû essentiellement à la faible solubilité des gaz dans l'eau, et d'autre part, lors de la formation de ces hydrates, une forte agglomération des particules entre elles conduisant à la formation de blocs solides, de bouchons ou de dépôts qui rendent le système non pompable.

Avec les systèmes eau/solvant/composés amphiphiles, on observe qu'en mettant en contact le gaz de charge à traiter avec ces mélanges, on obtient :
- avec un choix judicieux du solvant, une possible solubilisation préférentielle du ou des composés acides du gaz à traiter dans le solvant,
- dans des conditions de pression et de température adéquates, une formation d'hydrates enrichis en composés acides dans des conditions thermodynamiques favorables et avec un taux de conversion de l'eau en hydrate élevé,
- avec des composés amphiphiles adaptés, on obtient des particules d'hydrates non agrégées dans le solvant. La formation de bloc d'hydrates est donc évitée et la dispersion des particules d'hydrates reste aspirable.

Ces propriétés avantageuses se retrouvent sur une très large gamme de températures et de pressions.

Le composé amphiphile peut être ajouté audit mélange dans une proportion comprise entre 0,1 et 10% en poids, et de préférence entre 0,1 et 5% en poids, par rapport à la phase non miscible dans la phase aqueuse, c'est-à-dire le solvant.

Le solvant utilisé pour le procédé peut être choisi parmi plusieurs familles : les solvants hydrocarbonés, les solvants de type silicone, les solvants halogénés ou perhalogénés.

Dans le cas des solvants hydrocarbonés. Le solvant peut être choisi parmi
- des coupes aliphatiques, par exemple des coupes isoparaffiniques ayant un point éclair suffisamment élevé pour être compatibles avec le procédé selon l'invention,
- des solvants organiques de type coupes aromatiques ou coupes naphténiques peuvent également être utilisées avec les mêmes conditions de point éclair,
- des produits purs ou en mélanges choisis parmi les alcanes ramifiés, les cycloalcanes et alkylcycloalcanes, les composés aromatiques, alkylaromatiques,

Le solvant hydrocarboné utilisé pour le procédé présente en général un point éclair est supérieur à 40°C, et de préférence supérieur à 75°C et plus précisément supérieur à 100°C. Son point de cristallisation est inférieur à -5°C.

Les solvants de type silicone, seuls ou en mélanges, sont choisis par exemple parmi :
- les polydiméthylsiloxane (PDMS) linéaires du type (CH₃)₃-SiO-[(CH₃)₂-SiO]ₙ-Si(CH₃)₃ avec n compris entre 1 et 900, correspondant à des viscosités à température ambiante comprises entre 0,1 et 10000 mPa.s,
- les polydiéthylsiloxanes dans la même gamme de viscosité,
- les polydiméthylsiloxanes cycliques D₄ à D₁₀ et préférentiellement de D₅ à D₈. Le motif D représente l'unité monomère diméthylsiloxane,
- les poly(trifluoropropyl méthyl siloxane).

Les solvants halogénés ou perhalogénés pour le procédé sont choisis parmi les perfluorocarbures (PFC), les hydrofluoroéthers (HFE), les perfluoropolyéthers (PFPE).

Le solvant halogéné ou perhalogéné utilisé pour le procédé présente engénéral un point d'ébullition est supérieur ou égal à 70°C à pression atmosphérique et que sa viscosité est inférieure à 1 Pa.s à température ambiante et à la pression atmosphérique.

Les composés amphiphiles comportent une partie hydrophile qui peut être soit neutre, soit anionique, soit cationique, soit encore zwittérionique. La partie présentant une forte affinité avec le solvant (désignée comme hydrophobe) peut être soit hydrocarbonée, soit siliconée ou fluoro-siliconée, soit encore halogénée ou perhalogénée.

Les composés amphiphiles hydrocarbonés utilisés seuls, ou en mélanges, pour faciliter la formation et/ou le transport des hydrates selon la présente invention sont choisis parmi les composés amphiphiles non ioniques, anioniques, cationiques ou zwittérioniques.

Les composés non ioniques utilisés pour le procédé contiennent en général :
- une partie hydrophile comprenant soit des groupements oxyde d'alkylène, hydroxy ou encore des groupements amino alkylène,
- une partie hydrophobe comprenant une chaîne hydrocarbonée dérivée d'un alcool, d'un acide gras, d'un dérivé alkylé d'un phénol ou une polyoléfine, par exemple dérivée de l'isobutène ou du butène.

La liaison entre la partie hydrophile et la partie hydrophobe peut, par exemple être une fonction éther, ester ou amide. Cette liaison peut également être obtenue par un atome d'azote ou de soufre.

Parmi les composés hydrocarbonés amphiphiles non ioniques, on peut mentionner les alcools gras oxyéthylés, les alkylphénol alkoxylés, les dérivés oxyéthylés et/ou oxypropylés, les éthers de sucre, les esters de polyol, tels que glycérol, polyéthylène glycol, sorbitol et sorbitan, les mono et diéthanol amides, les amide d'acides carboxyliques, les acides sulfoniques ou les acides aminés.

Les composés hydrocarbonés amphiphiles anioniques utilisés pour le procédé contiennent en général un ou plusieurs groupements fonctionnels ionisables dans la phase aqueuse pour former des ions chargés négativement. Ces groupements anioniques apportant l'activité de surface de la molécule. Un tel groupement fonctionnel est un groupement acide ionisé par un métal ou une amine. L'acide peut par exemple être un acide carboxylique, sulfonique, sulfurique, ou phosphorique.

Parmi les composés hydrocarbonés amphiphiles anioniques, on peut mentionner:
- les carboxylates tels que les savons métalliques, les savons alkalins, ou les savons organiques (tels que les N-acyl aminoacides, N-acyl sarcosinates, N-acyl glutamates et N-acyl polypeptides),
- les sulfonates tels que les alkylbenzènesulfonate (c'est à dire les alkylbenzenesulfonate alkoxylés) les paraffines et oléfines sulfonates, les ligosulfonate ou les dérivés sulfonsucciniques (tels que les sulfosuccinates, hémisulfosuccinates, dialkylsulfosuccinates, par exemple le dioctyl-sulfosuccinate de sodium).
- les sulfates tel que les alkylsulfates, les alkyléthersulfates et les phosphates.

Les composés hydrocarbonés amphiphile cationiques utilisés pour le procédé contiennent en général un ou plusieurs groupements fonctionnels ionisables dans la phase aqueuse pour former des ions chargés positivement. Ces groupements cationiques apportant l'activité de surface de la molécule.

Parmi les composés hydrocarbonés cationiques, on peut mentionner :
- les sels d'alkylamine tels que
   - les alkylamine éthers,
   - les sels d'ammonium quaternaires tels que les dérivés d'alkyle triméthyl ammonium ou les dérivés de tetraalkylammonium ou encore les dérivés d'alkyle diméthyle benzyle ammonium,
   - les dérivés d'alkyle amine alcoxylés
- les dérivés de sulfonium ou de phosphonium, par exemple les dérivés tétraalkyle phosphonium.
- les dérivés hétérocycliques tels que les dérivés pyridinium, imidazolium, quinolinium, pipéridinium ou morpholinuim.

Les composés hydrocarbonés zwittérioniques utilisés pour le procédé possèdent en général au moins deux groupements ionisables, tels que l'un au moins est chargé positivement et l'un au moins est chargé négativement. Les groupements étant choisis parmi les groupements anioniques et cationiques décrits précédemment, tels que par exemple les bétaïnes, les dérivés alkyl amido bétaïnes, des sulfobétaïne, des phosphobétaïnes ou encore des carboxybétaïnes.

Les composés amphiphiles, comportant une partie hydrophile neutre, anionique, cationique, ou zwittérionique, peuvent également avoir une partie hydrophobe (définie comme présentant une forte affinité avec le solvant non miscible à l'eau) siliconée ou fluoro-siliconée. Ces composés amphiphiles siliconés, oligomères ou polymères, peuvent également être utilisés pour les mélanges eau/solvant organique ou eau/solvant halogéné ou perhalogéné ou encore eau/solvant siliconé.

Les composés amphiphiles siliconés neutres peuvent être des oligomères ou des copolymères de type PDMS dans lesquels les groupements méthyles sont partiellement remplacés par des groupements polyoxyde d'alkylène (de type polyoxyde d'éthylène, polyoxyde de propylène ou d'un polymère mélange polyoxyde d'éthylène et de propylène) ou pyrrolidone tels que les dérivés PDMS/hydroxy-alkylène oxypropyl-méthyle siloxane ou encore des dérivés alkyl méthyle siloxane/hydroxy-alkylène oxypropyl-méthyle siloxane.

Ces copolyols obtenus par réaction d'hydrosilylation possèdent des groupements hydroxyles finaux réactifs. Ils peuvent donc être utilisés pour réaliser des groupements ester, par exemple par réaction d'un acide gras, ou encore des groupements alkanolamides, ou encore des groupements glycosides.

Des polymères siliconés comportant des groupements alkyls latéraux (hydrophobes) directement liés à l'atome de silicium peuvent également être modifiés par réaction avec des molécules de type fluoro alcools (hydrophiles) pour former des composés amphiphiles.

Les propriétés tensioactives sont ajustées avec le rapport groupement hydrophile/groupement hydrophobe.

Les copolymères PDMS peuvent également être rendus amphiphiles par des groupements anioniques tels que des groupements phosphate, carboxylate, sulfate ou encore sulfosuccinate. Ces polymères sont généralement obtenus par réaction d'acides sur les fonctions hydroxydes finales de chaînes latérales de polyoxyde d'alkynlène de polysiloxane.

Les copolymères PDMS peuvent également être rendus amphiphiles par des groupements cationiques tels que des groupements ammonium quaternaire, des groupements alkylamido amine quaternisée, ou des groupements alkyle alcoxy amine quaternisée ou encore une imidazoline amine quaternisée. On peut utiliser, par exemple le copolymère PDMS/chlorure de benzyle tri-méthyl ammonium méthylsiloxane ou encore les dérivés halogéno N-Alkyl-N,Ndiméthyl-(3-siloxanylpropyl)ammonium.

Les copolymères PDMS peuvent également être rendus amphiphiles par des groupements de type bétaïne tel que une carboxybétaïne, une alkyl amido bétaïne, une phosphobétaïne ou encore une sulfobétaïne. Dans ce cas, les copolymères comprendront une chaîne siloxane hydrophobe et par exemple une partie organobétaïne hydrophile de formule générale :

(Me₃SiO)(SiMe₂O₎ₐ(SiMeRO)SiMe₃

Avec R = (CH₂)₃⁺NMe₂(CH₂)_{b}COO⁻ ; a= 0,10 ; b= 1,2

Les composés amphiphiles, comportant une partie hydrophile neutre, anionique, cationique, ou zwittérionique, peuvent aussi avoir une partie hydrophobe (définie comme présentant une forte affinité avec le solvant non miscible à l'eau) halogénés ou perhalogénés. Ces composés amphiphiles halogénés, oligomères ou polymères, peuvent également être utilisés pour les mélanges eau/solvant organique ou eau/solvant halogéné ou perhalogéné ou encore eau/solvant siliconé.

Les composés amphiphiles halogénés tels que par exemple les composés fluorés peuvent être ioniques ou non ioniques. En particulier, on peut citer :
- les composés halogénés ou perhalogénés amphiphiles non ioniques tels que les composés répondant à la formule générale Rf(CH₂)(OC₂H₄)ₙOH, dans laquelle Rf est une chaîne perfluorocarbonée ou fluorocarbonée partiellement hydrogénée dans lesquels n est un nombre entier au moins égal à 1, les agents tensioactifs non ioniques fluorés de type polyoxyéthylène-fluoroalkyléther,
- les composés amphiphiles ionisables pour former de composés anioniques, tels que les acides perfluorocarboxyliques, et leurs sels, ou les acides perfluorosulphoniques et leurs sels, les composés perfluorophosphates, les acides mono et dicarboxyliques dérivant des perfluoro polyéthers, et leurs sels, les acides mono et disulfoniques dérivant des perfluoro polyéthers, et leurs sels, les composés amphiphiles perfluoro polyéther phosphates et les composés amphiphiles perfluoro polyéther diphosphates,
- les composés halogénés amphiphiles cationiques ou anioniques perfluorés ou ceux dérivants des perfluoro polyéthers ayant 1, 2 ou 3 chaînes hydrophobes latérales, les fluoroalcools éthoxylés, les sulfonamides fluorées ou les carboxamides fluorées.

Le procédé, objet de l'invention, permet donc de produire un flux d'hydrogène pur en captant les impuretés présentes (CH₄, CO₂) sous forme d'hydrates. Le CO₂ et le méthane ainsi capté peuvent être régénérés, pour notamment dans le cas du méthane, être recyclé dans le procédé. Le flux riche en hydrogène peut être utilisé pour produire de l'électricité sans émission de CO₂.

Cette invention présente donc les avantages suivants:
- permettre d'éviter la perte de méthane avec le flux d'hydrogène produit.
- permettre la capture quasi complète du CO₂.
- permettre le recyclage en pression du méthane vers l'entrée du réacteur de vaporéformage sans compresseur.
- permettre d'être moins contraignant sur la conversion du réacteur de vaporéformage en amont et donc de gagner sur la durée de vie des tubes (surfaces d'échange) du réacteur de vaporéformage.
- gain économique.
L'invention est tout à fait utilisable pour une autre charge (naphtha léger vaporisé par exemple). Dans ce cas, le méthane recyclé serait mélangé avec la charge naphath vaporisée avant d'entrée dans le SMR.

Les exemples suivant illustrent la présente invention.

### Exemples:

Les conditions opératoires ainsi que la composition des différents flux au cours des procédés illustrés dans les exemples 1 et 2 suivants, sont récapitulées dans le tableau A ci-après, dans le cas par exemple d'un vaporéformage fonctionnant à 4 MPa.

**Tableau A (le flux 70 concerne uniquement le procédé selon l'invention).**

| N° du flux | Pression (MPa) | Température (°C) |
|---|---|---|
| 1 | 7 | ambiante |
| 2 | 4 | 350 |
| 30 | 4 | 300 (après refroidissement) |
| 40 | 4 | 1 (après refroidissement) |
| 60 | 0,2/4 | ambiante |
| 50 | 4 | 1 (après refroidissement) |
| 70 | 4 | ambiante |

### Exemple 1 selon l'art antérieur

Le tableau suivant récapitule les résultats obtenus lors de la purification de l'hydrogène par une unité d'absorption chimique telle que décrite sur la figure 1 et connue de l'homme du métier.

**Tableau B (le flux 1 contient également C₂H₆=7;C₃H₈=1,i-C₄H₁₀=0,05, n-C₄H₁₀=0,05,i-C₅H₁₂=0,005,C₆H₁₄=0,001,H₂S=0,0015,N₂=0,89, SO₂=0,000,i-C₄H₁₀=0,05)**

| | | | | |
|---|---|---|---|---|
| N° du flux | 1 | 40 | 50 | 60 |
| Composition (% mol) | | | | |
| H₂ | | 60 | 92,3 | 0 |
| CO₂ | 2 | 15 | 0 | 96,3 |
| CH₄ | 89 | 5 | 7,7 | 0 |
| H₂O | | 20 | 0 | 3,7 |
| Pression (MPa.) | 7 | 4 | 4 | 0,2 |
| Débit (Kmole/h) | | 100 | 65 | 15,6 |
| Température (°C) | ambiante | 1 | 1 | 40 |

Avec le procédé selon l'art antérieur la pureté en hydrogène est seulement de 92,3 %, l'impureté principale étant le méthane, composé qui produit du CO₂ lors de la combustion ultérieure du flux d'hydrogène. Le taux de captage du CO₂ avec ce type de procédé est de 75% seulement.

### Exemple 2 selon l'invention

Cet exemple illustre le procédé de production d'hydrogène selon l'invention en référence à la mise en oeuvre de la figure 4. Le flux sortant de l'étape de conversion (40) est refroidi pour être dans les conditions de la formation d'hydrates. Le tableau C suivant récapitule les résultats obtenus.

**Tableau C (le flux 1 contient également C₂H₆=7;C₃H₈=1,i-C4H₁₀=0,05, n-C₄H₁₀=0,05,i-C₅H₁₂=0,005,C₆H₁₄=0,001,H₂S=0,0015,N₂=0,89, SO₂=0,0001,i-C₄H₁₀=0,05)**

| | | | | |
|---|---|---|---|---|
| N° du flux | 1 | 40 | 50 | 60 |
| Composition (% mol) | | | | |
| H₂ | | 60 | 98,9 | 0 |
| CO₂ | 2 | 15 | 0,9 | 74,9 |
| CH₄ | 89 | 5 | 0,2 | 25,1 |
| H₂O | | 20 | 0 | 0 |
| Pression (MPa.) | 7 | 4 | 4 | 4 |
| Débit (Kmole/h) | | 100 | 60,7 | 19,34 |
| Température (°C) | ambiante | 1 | 1 | 20 |

Le flux d'hydrogène (50) obtenu par le procédé selon l'invention à une très bonne pureté (98,9 %) et est quasi exempt de méthane (0,2 %). Le flux de méthane et CO₂ (60) sortant du réacteur de dissociation (R2) est obtenu à haute pression (4 MPa) et peut être séparé dans une étape ultérieure (R3) par absorption chimique par exemple. Le taux de captage de CO₂ est de 96,6% et est donc très supérieur à celui obtenu avec le procédé de l'art antérieur. Cet exemple montre ainsi que le procédé selon l'invention est donc plus efficace en terme de purification d'hydrogène et de captage du CO₂.

Il doit être évident pour l'homme du métier que la présente invention ne doit pas être limitée aux détails donnés ci-dessus et permet des modes de réalisation sous de nombreuses autres formes spécifiques sans s'éloigner du domaine d'application de l'invention. Par conséquent, les présents modes de réalisation doivent être considérés à titre d'illustration, et peuvent être modifiés sans toutefois sortir de la portée définie par les revendications jointes.

## Revendications

1. Procédé de production d'hydrogène à partir d'une charge hydrocarbonée et de vapeur d'eau comprenant :
- une étape de production d'un gaz de synthèse dans une unité de vaporéformage de la charge hydrocarbonée en présence de la vapeur d'eau, un combustible apportant la chaleur nécessaire à la réaction,
- une étape de conversion à la vapeur du gaz de synthèse obtenu à l'étape précédente produisant un flux d'hydrogène contenant du méthane et du dioxyde de carbone,
- une étape de captage du dioxyde de carbone et du méthane, présents dans le flux obtenu à l'étape de conversion à la vapeur, sous forme d'hydrates produisant un flux d'hydrogène pur,
- une étape de régénération du méthane,
- une étape de recyclage du méthane vers le vaporéformage.

2. Procédé de production d'hydrogène selon la revendication 1 dans lequel l'étape de captage du dioxyde de carbone et du méthane sous forme d'hydrates est suivi d'une étape de régénération du dioxyde de carbone.

3. Procédé de production d'hydrogène selon la revendication 1 dans lequel une étape de régénération du dioxyde de carbone est effectuée en même temps que l'étape de régénération du méthane.

4. Procédé de production d'hydrogène selon une des revendications 1 à 3 dans lequel la charge hydrocarbonée est du gaz naturel.

5. Procédé de production d'hydrogène selon une des revendications 1 à 4 dans lequel l'étape de captage du dioxyde de carbone et du méthane sous forme d'hydrate s'effectue dans un mélange comprenant de l'eau et un solvant non miscible à l'eau.

6. Procédé de production d'hydrogène selon une des revendications 5, dans lequel le mélange comprend en outre au moins un composé amphiphile.

7. Procédé de production d'hydrogène selon une des revendications 1 à 6 dans lequel l'étape de captage sous forme d'hydrates est réalisée à une température comprise entre 0 et 60°C et une pression comprise entre 0,2 et 6 MPa.

8. Procédé de production d'hydrogène selon la revendications 2 dans lequel l'étape de régénération du dioxyde de carbone est réalisée à une température comprise entre 0 et 40 °C et une pression comprise entre 0,2 et 6 MPa.

9. Procédé de production d'hydrogène selon la revendications 1 dans lequel l'étape de régénération du méthane est réalisée à une température comprise entre 0 et 40 °C et une pression comprise entre 0,2 et 6 Mpa.

10. Procédé de production d'hydrogène selon la revendications 3 dans lequel l'étape de régénération du dioxyde de carbone et du méthane est réalisée à une température comprise entre 0 et 40 °C et une pression comprise entre 0,2 et 6 MPa.

11. Procédé de production d'hydrogène selon une des revendications 1 à 10 dans lequel le flux de méthane obtenu par régénération est recyclé à l'entrée de l'étape de vaporeformage.

12. Procédé de production d'hydrogène selon une des revendications 1 à 11 comprenant une étape de production d'électricité à partir du flux d'hydrogène obtenu à l'étape de captage du dioxyde de carbone et de méthane.

13. Procédé de production d'hydrogène selon la revendication 12 dans lequel la production d'électricité est réalisée en envoyant le flux d'hydrogène dans une chambre de combustion.

14. Procédé de production d'hydrogène selon la revendication 13 dans lequel les fumées chaudes obtenues à l'issu de l'étape de combustion sont recyclées vers le réacteur de vaporéformage.
